# FASCICULE DE BREVET EUROPEEN

(11) **EP 2 943 767 B1**
(45) Date de publication et mention de la délivrance du brevet: **08.03.2017**
(21) Numéro de dépôt: 14704383.0
(22) Date de dépôt: 09.01.2014
(51) Int. Cl.: F16C 33/64, G05B 19/4099, G01M 1/34

(54) **PROCÉDÉ D'ÉQUILIBRAGE D'UNE PIÈCE TOURNANTE POUR PRODUIRE UNE PIÈCE TOURNANTE USINÉE ET ÉQUILIBRÉE**
VERFAHREN ZUM AUSWUCHTEN EINES ROTIERENDEN TEILS ZUR HERSTELLUNG EINES BEARBEITETEN UND AUSGEWUCHTETEN ROTIERENDEN TEILS
METHOD FOR BALANCING A ROTATING PART IN ORDER TO PRODUCE A MACHINED AND BALANCED ROTATING PART

(30) Priorité: 14.01.2013 FR 1350297
(43) Date de publication de la demande: 18.11.2015
(73) Titulaire: Videometric, 63730 Les-Martres-de-Veyre (FR)
(72) Inventeur: PEUCHOT, Bernard, F-63730 Les Martres-de-Veyres (FR)
(74) Mandataire: IP Trust
(86) Numéro de dépôt international: PCT/FR2014/050029
(87) Numéro de publication internationale: WO 2014/108638

(56) Documents cités:
- EP-A2- 1 760 443

## Description

### Domaine de l'invention

La présente invention concerne le domaine de l'usinage de pièce mécanique tournante par un équipement d'usinage piloté par une commande numérique.

Les pièces tournantes sont par exemple, et de manière non limitative, des vilebrequins ou des rotors de moteur électrique, des turbines, etc.

Les pièces tournantes comportent certaines zones usinées répondant à des tolérances faibles et certaines zones à moindres contraintes, permettant d'ajuster les dimensions en vue d'un équilibrage parfait de la pièce tournante.

Dans la description qui suit, l'invention est décrite dans le cas de la fabrication d'un vilebrequin équilibré, sans que cela ne limite la protection aux seuls vilebrequins.

Pour un vilebrequin, les zones usinées à tolérances faibles (typiquement de l'ordre cinq microns) sont par exemple les paliers et les manetons dont le positionnement et les dimensions doivent être très précis pour pouvoir respecter les contraintes de fabrication et de fonctionnement du moteur. Il peut également s'agir de perçages ou des zones faisant l'objet d'un usinage spécifique. Ces zones usinées sont reliées par des zones à tolérance plus relâchée (typiquement de l'ordre du millimètre voire plus) correspondant simplement à des contraintes de passage dans le bloc moteur.

Ce sont ces dernières zones qui peuvent ajustées pour parfaire l'équilibrage du vilebrequin, typiquement par enlèvement de matière dans les processus industriels actuels.

Dans l'état de la technique, l'équilibrage est réalisé par enlèvement de matière dans les zones de tolérance relâchée, selon les indications de la machine d'équilibrage : on réalise un vilebrequin, on le monte sur un banc d'équilibrage pour mesurer son déséquilibre, et on procède ensuite aux enlèvements de matière indiqués, jusqu'à ce que la mesure sur le banc soit satisfaisante. Le choix des zones d'enlèvement et la quantité de matière à enlever sont indiqués par le banc d'équilibrage mécanique. L'enlèvement de matière se fait par exemple par le perçage des zones désignées, typiquement dans les contrepoids qui correspondent à des zones de tolérance relâchée.

### Etat de la technique

On connaît dans l'état de la technique des solutions d'équilibrage mécanique. Une telle solution est par exemple décrite dans la demande de brevet américain US2003230142 ou le brevet américain US4545341.

On connaît également le brevet français FR2797314 qui concerne un procédé d'usinage de vilebrequin du type de celui comportant les opérations principales suivantes : - détermination des points de départ,- usinage des extrémités, paliers et manetons, - réalisation des trous d'huile, - finition des extrémités, paliers et manetons, - mesure dynamique et éventuel enlèvement de matière à des fins d'équilibrage, remarquable en ce qu'il consiste à réaliser les opérations de mesure dynamique des masses et d'enlèvement de matière à des fins d'équilibrage, avant les opérations de finition.

On connaît également dans l'état de la technique des solutions pour éviter les ajustements successifs, par une préparation d'un fichier de commande d'une machine d'usinage, visant l'obtention en une seule étape d'une pièce tournante présentant un équilibrage satisfaisant.

Le brevet européen EP1760443 décrit ainsi un procédé d'équilibrage de vilebrequins comprenant des parties usinées en extrémités d'axes A, B, des manetons, tourillons et contrepoids caractérisé en ce que :
- on procède à l'établissement, par voie numérique, à la conception d'un vilebrequin de référence du type à obtenir sur la base de données client.
- on procède à la fabrication d'un vilebrequin qui est ensuite analysé dans un système de stéréo vision par l'identification d'une multitude de points d'images dans l'espace de manière à reconstituer la surface réelle en trois dimensions limitant son volume, on en déduit son axe d'inertie.
- on compare ensuite, par numérisation, le vilebrequin de référence au vilebrequin fabriqué et visionné : vérification de sa conformité / tolérances dimensionnelles.
- on procède, par traitement numérique, à son usinage virtuel / axe d'inertie calculé précédemment.
- on procède ensuite au calcul du nouvel axe d'inertie / nouvelle répartition des masses résultant de l'usinage.
- on procède enfin, sur une machine, au dressage des extrémités du vilebrequin et perçage des trous de centre matérialisant l'axe d'inertie idéal.

On connaît aussi le brevet européen EP2305420 concernant un procédé de détermination du centre de rotation.

Un autre document de l'art antérieur, le brevet japonais JP2007264746 décrit un procédé visant à calculer avec précision le centre de rotation d'une pièce tournante, consistant à mesurer la forme tridimensionnelle d'un travail de pré-travail puis à réaliser les traitements suivants :
- une étape de préparation de la forme finie, après formage de rotation d'un travail par simulation,
- une étape destinée à l'exclusion de toute section excédent de la forme tridimensionnelle du travail de pré-travail acquise par la mesure de la forme finie sur la base de la simulation,
- et une étape pour calculer le centre de rotation de la forme à l'exclusion de la section excédent.

### Inconvénients de l'art antérieur

Les solutions de l'art antérieur ne sont pas satisfaisantes car les procédés mettant en oeuvre des ajustements mécaniques successifs sont empiriques, nécessitent des opérations longues et fastidieuses et ne permettent pas toujours de converger vers une pièce parfaitement équilibrée.

La solution proposée dans le brevet EP1760443 n'est pas non plus satisfaisante car elle s'appuie sur un modèle de calcul inadapté lorsque l'ébauche initiale présente des imperfections trop importantes. Dans ces cas, la pièce obtenue nécessite quand même des ajustements additionnels.

### Solution apportée par l'invention

La présente invention vise à remédier aux inconvénients de l'art antérieur, en proposant un procédé de préparation de fichier de commande de l'équipement d'usinage assurant un équilibrage satisfaisant réduisant les reprises additionnelles, même lorsque l'ébauche originelle présente des imperfections importantes.

A cet effet, la présente invention concerne, selon son acception la plus générale, un procédé d'équilibrage d'une pièce tournante pour produire une pièce tournante usinée et équilibrée, comprenant des zones usinées à forte tolérance (roulements, paliers,...) et des zones à faible tolérance, usinées ou non (surfaces brutes,...),

A partir d'une ébauche de pièce tournante d'une part et d'un modèle numérique nominal des contraintes d'usinage des zones usinées à fortes et faibles tolérances d'une pièce tournante nominale d'autre part
- ledit procédé comportant une étape initiale de numérisation de ladite ébauche pour l'obtention d'un modèle numérique de ladite ébauche, dans un référentiel de numérisation prédéterminé
- une première étape d'usinage virtuel dudit modèle numérique de l'ébauche, pour le calcul d'un modèle numérique intermédiaire dans le référentiel cible d'une pièce tournante usinée à partir d'une part du modèle numérique de l'ébauche et du modèle numérique nominal des contraintes d'usinage d'autre part
- une étape de détermination de l'axe d'inertie dudit modèle numérique intermédiaire
- au moins une étape de modification du référentiel géométrique dudit modèle numérique de l'ébauche pour faire correspondre ledit axe d'inertie dudit modèle numérique intermédiaire avec l'axe de rotation nominal du moteur dans le référentiel cible
- des étapes itératives de calcul des deux étapes précédentes jusqu'à ce que l'écart entre l'axe d'inertie calculé et l'axe nominal du moteur soit inférieur à une valeur seuil
- l'étape finale consistant à commander un équipement d'usinage réel, dans le référentiel cible, à partir du modèle numérique nominal des contraintes d'usinage sur l'ébauche réelle placée sur l'équipement d'usinage en conformité avec le modèle numérique intermédiaire résultant de la dernière itération.

Ce procédé aboutit à un résultat privilégiant le positionnement optimal de la pièce sur l'équipement d'usinage en limitant au maximum l'enlèvement de matière, alors que les solutions de l'art antérieur sont basées sur un positionnement approximatif, et une compensation par un enlèvement de matière.

Avantageusement, ladite étape de modification du référentiel géométrique consiste à recalculer un vecteur de translation [Tx, Ty, Tz] ainsi que les trois angles d'Euler [Ax, By, Gz] ou toute autre consigne utilisant les méthodes usuelles alternatives comme par exemple les quaternions.

Selon un mode de réalisation particulier, le procédé comporte :
- une étape de fabrication d'une pièce brute,
- une étape consistant à numériser cette pièce et obtenir le modèle brut de cette pièce,
- une étape d'initialisation d'un vecteur de translation [Txi, Tyi, Tzi] ainsi que des trois angles d'Euler [Axi, Byi, Gzi] correspondant au positionnement initial du modèle numérique déterminé lors de l'étape
- une étape de calcul d'un modèle virtuel par un traitement consistant à déplacer le modèle brut selon la transformation de corps rigide définie précédemment par le vecteur [Txi, Tyi, Tzi] ainsi que les angles de rotation [Axi, Byi, Gzi]
- une étape d'usinage virtuel consistant à appliquer les consignes d'usinages sous forme de données numériques au modèle virtuel repositionné lors de l'étape précédente
- une étape de calcul de l'axe d'inertie à partir de la pièce virtuelle intermédiaire susvisée
- une étape de comparaison de l'axe d'inertie calculé à l'axe moteur et de modification lors d'une étape d'ajustement du vecteur [Tx, Ty, Tz] ainsi que des angles de rotation [Ax, By, Gz] pour déterminer une nouvelle position déterminée par un vecteur [Txj, Tyj, Tzj] et par les angles d'Euler [Axj, Byj, Gzj], optimisés suivant une méthode d'optimisation et d'itération de l'ensemble des traitements correspondant aux étapes précédentes.

Selon un mode de mise en oeuvre particulier, le procédé selon l'invention comporte des étapes de calcul de l'équilibrage dans une portion limitée et, si cet équilibrage apparaît imparfait, à déterminer une contrainte d'usinage supplémentaire venant s'ajouter aux usinages virtuels originels, pour l'enlèvement de matière en vue d'équilibrer ladite portion locale.

Selon une variante particulière, on procède, après le calcul de l'équilibrage local, à de nouvelles itérations, prenant en compte ce modèle avec les usinages additionnels.

L'invention concerne également un équipement d'usinage comprenant un processeur commandé par une commande numérique obtenue par la mise en oeuvre du procédé susvisé.

Elle concerne aussi un programme d'ordinateur pour la mise en oeuvre de ce procédé ainsi qu'un support informatique comportant un enregistrement d'un programme d'ordinateur pour la mise en oeuvre du procédé.

### Description détaillée d'un exemple non limitatif de réalisation

La présente invention sera mieux comprise à la lecture de la description détaillée qui suit, concernant un exemple non limitatif de mise en oeuvre, se référant aux dessins annexés où :
- les figures 1 à 5 représentent des vues schématiques des étapes successives mises en oeuvre dans l'art antérieur
- les figures 6 et 7 représentent des vues schématiques des étapes successives mises en oeuvre dans le procédé conforme à l'invention
- la figure 8 représente le schéma fonctionnel du traitement numérique selon l'invention.

### Procédé selon l'art antérieur

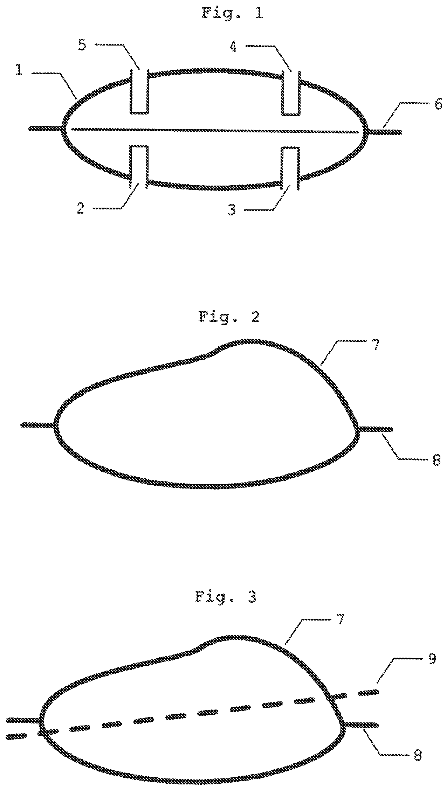

La solution proposée dans le brevet EP1760443 est illustrée par les figures 1 à 5.

La première étape consiste à procéder à l'établissement, par voie numérique, à la conception d'un vilebrequin de référence type du type à obtenir sur la base des données client.

Ces données clients sont illustrées par la figure 1. Ces données clients sont constituées par un modèle numérique tridimensionnel déterminant la géométrie de référence du vilebrequin schématisée par le contour (1) ainsi que les usinages (2 à 5) requis.

Ce modèle numérique détermine les zones (2 à 5) à forte contrainte, et les autres zones qui peuvent faire l'objet de modification en vue de l'équilibrage. Sur ce modèle est déterminé l'axe moteur (6) imposé par l'architecture du moteur auquel ce vilebrequin est destiné.

L'étape suivante, selon cet art antérieur, consiste à « procéder à l'établissement par voie numérique à la conception d'un vilebrequin qui est ensuite analysé dans un système de stéréovision par l'identification d'une multitude de points d'images dans l'espace de manière à reconstituer la surface réelle en trois dimensions, limitant son volume ».

Cette étape est illustrée par la figure 2 qui représente la géométrie de la pièce brute, issue de la fabrication par forgeage ou fonderie (ou tout autre moyen). Cette géométrie de la pièce brute est représentée schématiquement par le contour (7), avec une indication de l'axe de numérisation (8).

Il est ensuite proposé dans l'art antérieur de « déduire son axe d'inertie de la pièce brute, et de comparer par traitement numérique à son usinage virtuel par rapport à l'axe d'inertie [calculé à l'étape précédente] ».

La figure 3 illustre cette étape en désignant l'axe d'inertie calculé (9) et son positionnement par rapport à l'axe de numérisation (8) et le contour (7) de la pièce brute.

L'étape suivante, selon l'art antérieur consiste à comparer ensuite, par numérisation, le vilebrequin de référence au vilebrequin fabriqué et visionné : vérification de sa conformité par rapport aux tolérances dimensionnelles, puis à procéder, par traitement numérique, à son usinage virtuel / axe d'inertie calculé précédemment.

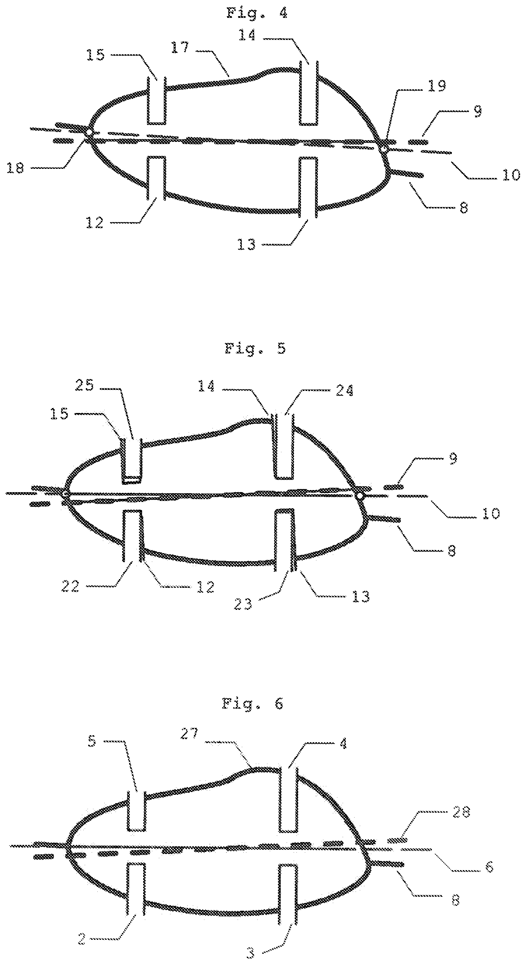

Cette étape est illustrée par la figure 4.

Elle consiste à calculer une représentation numérique tridimensionnelle déterminant la géométrie de la pièce usinée virtuellement, représentée schématiquement par les zones d'usinage virtuel (12 à 15) et par un contour (17) résultant de l'usinage virtuel.

Cette même figure 4 représente également l'axe d'inertie idéal (10) obtenue par l'étape de calcul du nouvel axe d'inertie/nouvelle répartition des masses résultant de l'usinage. Cet axe idéal (10) est, toujours selon l'art antérieur, utilisé pour le dressage des extrémités du vilebrequin et perçage des trous de centre (18, 19) matérialisant l'axe d'inertie idéal (10).

Ce procédé de l'art antérieur permet de piloter un équipement d'usinage autour de l'axe dit « idéal » (10), matérialisé par les deux perçages (18, 19). La figure 5 illustre le résultat de cet usinage mécanique, piloté par le fichier résultant du traitement selon l'art antérieur :
Il aboutit à la réalisation d'usinages (22 à 25) qui s'avèrent ne pas correspondre parfaitement aux zones d'usinage virtuel (12 à 15), en raison de la différence entre :
   - le repère dans lequel les zones d'usinage virtuel (12 à 15) ont été calculées
   - le repère dans lequel les zones d'usinage réelles (22 à 25) ont été effectivement réalisées.

Il en résulte d'une part une erreur de positionnement des zones d'usinage, ce qui est rédhibitoire du fait des tolérances très faibles acceptables pour ces zones, et d'autre part un équilibrage approximatif ne correspondant pas pleinement aux objectifs. Ces anomalies sont d'autant plus importantes que la pièce brute originelle est fortement éloignée de la géométrie nominale. En résumé, le procédé de l'art antérieur n'est applicable que pour des pièces brutes originelles déjà très proches de la géométrie nominale.

### Description du procédé selon l'invention.

Le procédé selon l'invention prend en compte les mêmes données initiales que la solution susvisée, correspondant aux figures 1 et 2.

Il diffère par contre fondamentalement par les traitements qui sont ensuite effectués pour préparer la commande de l'équipement d'usinage mécanique. En particulier, le procédé selon l'invention ne prend pas en compte un « axe d'inertie calculé (9) » ni « son positionnement par rapport à l'axe de numérisation (8) et le contour (7) de la pièce brute ».

Au contraire, le procédé selon l'invention consiste à procéder à un usinage virtuel dans le repère d'usinage comprenant l'axe moteur (6). Tous les traitements numériques mis en oeuvre par l'invention sont effectués dans ce repère comprenant l'axe moteur (6), et non pas dans un repère comprenant un axe d'inertie calculé (9).

Les traitements réalisés par l'invention sont de nature itérative, sur la représentation numérique de la pièce brute (7) dans une position intermédiaire.

On procède dans un premier temps à un traitement numérique illustré par la figure 6, consistant à calculer une géométrie virtuelle d'une pièce intermédiaire correspondant aux usinages virtuels (2 à 5), strictement conformes aux usinages requis, dans le référentiel moteur (6), sans aucune transformation de ces usinages.

Ce calcul de l'usinage est effectué sur la représentation de la pièce brute (27), dont la géométrie correspond à celle de la pièce brute numérisée (7), et dont l'orientation diffère au cours des itérations.

On procède ensuite au calcul de l'axe d'inertie (28) à partie de la représentation de la pièce brute (27) usinée virtuellement avec les zones (2 à 5).

Tant que l'axe d'inertie (28) ne correspond pas à l'axe moteur (6), on modifie l'orientation de la pièce brute (27) par rapport à l'axe moteur (6), pour procéder à une nouvelle étape d'usinage virtuel susvisé.

Ces modifications sont effectuées de manière cohérente pour tendre vers une minimisation de l'écart entre l'axe d'inertie virtuel (28) et l'axe moteur (6).

Différentes stratégies de minimisation peuvent être appliquées.

La plus simple consiste à calculer un grand nombre de calcul d'axe d'inertie (28) d'une pièce usinée virtuellement sur une pièce brute virtuelle déplacée de manière aléatoire, et de sélectionner parmi les résultats celui qui présente le plus faible écart entre l'axe d'inertie calculé (28) et l'axe moteur (6).

On peut réduire le temps de traitement en utilisant des méthodes de minimisation de type Newton-Raphson, connue de l'homme du métier, ou toute autre méthode numérique similaire.

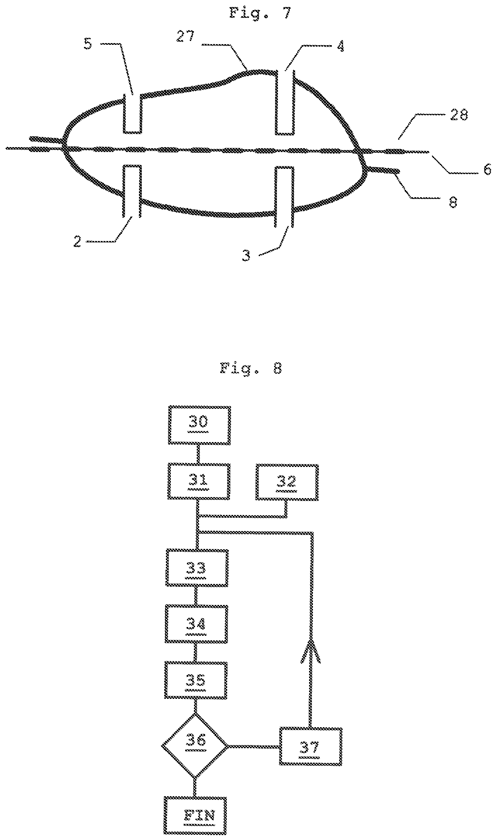

La figure 7 représente le résultat du traitement conduisant à un positionnement optimum de la pièce brute réelle sur l'équipement d'usinage, qui sera piloté à partir du fichier correspondant au positionnement calculé (28) dans sa dernière itération et l'application des contraintes d'usinage (2 à 5) qui sont les contraintes initiales et inchangées.

Eventuellement, des étapes ultérieures de contrôle de qualité de fabrication et de tolérances sont effectuées de manière connue.

La figure 8 représente la succession de traitements physiques et numériques mis en oeuvre par l'invention.

La première étape (30) consiste à fabriquer, par fonderie et forgeage, ou toute autre technique, une pièce brute dont la géométrie correspond à celle de la pièce cible au mieux des performances du procédé de fabrication. Cette pièce brute présente généralement des imperfections liées au procédé de fabrication.

L'étape suivante (31) consiste à numériser cette pièce brute. Cette numérisation peut être réalisée par des palpeurs physiques. Mais pour réduire le temps d'acquisition, et augmenter le nombre de points, il est connu et préféré de procéder à une numérisation à partir d'une ou plusieurs prises de vues par des caméras numériques, afin de construire un modèle numérique tridimensionnel (7).

A titre d'exemple, l'article « Mesure 3D de formes et de déformations par stéréovision » (Jean-José ORTEU) paru dans l'ouvrage« Techniques de l'Ingénieur, traité Génie mécanique BM 7 015 - 1 et suivantes » décrit une méthode d'acquisition 3D par une technique de mouchetis.

On dispose par ailleurs des consignes d'usinages sous forme de données numériques (32).

On initialise ensuite le vecteur de translation [Txᵢ, Tyᵢ, Tzᵢ] ainsi que les trois angles d'Euler [Axᵢ, Byᵢ, Gzᵢ] correspondant au positionnement initial du modèle numérique (7) déterminé lors de l'étape (31).

On calcule ensuite lors d'une étape (33) un modèle virtuel par un traitement consistant à déplacer le modèle brut (7) selon la transformation de corps rigide défini par le vecteur [Txᵢ, Tyᵢ, Tzᵢ] ainsi que les angles de rotation [Axᵢ, Byᵢ, Gzᵢ].

Ce modèle virtuel est ensuite usiné virtuellement lors d'une étape (34) qui consiste à appliquer les consignes d'usinages sous forme de données numériques (32) au modèle virtuel repositionné lors de l'étape précédente. Ce traitement peut par exemple être réalisé avec une plateforme de type CATIA (nom commercial). Le résultat de ce traitement est un modèle numérique tridimensionnel d'une pièce virtuelle intermédiaire.

L'étape suivante (35) consiste à calculer l'axe d'inertie (28) à partir de la pièce virtuelle intermédiaire susvisée, par exemple avec la plateforme CATIA (nom commercial).

On procède ensuite à une comparaison de l'axe d'inertie calculé (28) à l'axe moteur (6). Si le décalage entre ces deux axes est inférieur à une valeur seuil, le procédé prend fin.

Sinon, on modifie lors d'une étape (37) le vecteur [Tx, Ty, Tz] ainsi que les angles de rotation [Ax, By, Gz] pour déterminer une nouvelle position déterminée par un vecteur [Txⱼ, Tyⱼ, Tzⱼ] et par les angles d'Euler [Axⱼ, Byⱼ, Gz_{J}], optimisés suivant une méthode d'optimisation.

On procède ensuite à l'ensemble des traitements correspondant aux étapes (33) à (36).

L'invention concerne également un équipement d'usinage comprenant un processeur commandé par un fichier obtenu par la mise en oeuvre du procédé selon l'invention.

L'invention peut aussi être mise en oeuvre pour procéder à un équilibrage d'une partie seulement de la pièce tournante. Cette application est utile notamment pour le traitement de pièce de grande longueur, ou de pièces nécessitant un équilibrage local en sus de son équilibrage global, par exemple pour réaliser des vilebrequins de très haute performance.

Dans ce cas l'invention consiste à commander des enlèvements de matière locaux pour obtenir un modèle localement équilibré. A cet effet, on procède sur le modèle virtuel intermédiaire à un calcul de l'équilibrage dans une portion limitée. Si cet équilibrage apparaît imparfait, on détermine une contrainte d'usinage supplémentaire, pour l'enlèvement de matière en vue d'équilibrer ladite portion locale. Cet usinage supplémentaire se traduira par l'ajout au du modèle de la géométrie virtuelle d'une pièce intermédiaire correspondant aux usinages virtuels (2 à 5), des usinages additionnels. On procède ensuite à de nouvelles itérations, prenant en compte ce modèle avec les usinages additionnels.

## Revendications

1. - Procédé d'équilibrage d'une pièce tournante pour produire une pièce tournante usinée et équilibrée, comprenant des zones usinées à forte tolérance (roulements, paliers,...) et des zones à faible tolérance, usinées ou non (surfaces brutes,...), à partir d'une ébauche (7) de pièce tournante d'une part et d'un modèle numérique nominal des contraintes d'usinage des zones usinées à faibles tolérances (2 à 5) d'une pièce tournante nominale d'autre part, **caractérisé en ce que** le procédé comporte:
• une étape initiale de numérisation (31) de ladite ébauche pour l'obtention d'un modèle numérique de ladite ébauche, dans un référentiel de numérisation prédéterminé
• une étape (34) d'usinage virtuel dudit modèle numérique de l'ébauche, pour le calcul d'un modèle numérique intermédiaire (27) dans le référentiel cible comprenant l'axe moteur (6) d'une pièce tournante usinée à partir d'une part du modèle numérique de l'ébauche et du modèle numérique nominal des contraintes d'usinage d'autre part
• une étape (35) de détermination de l'axe d'inertie (28) dudit modèle numérique intermédiaire
• au moins une étape de modification (37) du référentiel géométrique dudit modèle numérique de l'ébauche pour faire correspondre ledit axe d'inertie (27) dudit modèle numérique intermédiaire avec l'axe de rotation nominal du moteur(6) dans le référentiel cible
• des étapes itératives de calcul des étapes précédentes (33, 34, 35) jusqu'à ce que l'écart entre l'axe d'inertie calculé (28) et l'axe nominal du moteur (6) soit inférieur à une valeur seuil
• l'étape finale consistant à commander un équipement d'usinage réel, dans le référentiel cible, à partir du modèle numérique nominal des contraintes d'usinage sur l'ébauche réelle placée sur l'équipement d'usinage en conformité avec le modèle numérique intermédiaire résultant de la dernière itération.

2. - Procédé d'équilibrage d'une pièce tournante selon la revendication 1 **caractérisé en ce que** ladite étape de modification du référentiel géométrique consiste à recalculer un vecteur de translation [Tx, Ty, Tz] ainsi que les trois angles d'Euler [Ax, By, Gz].

3. - Procédé d'équilibrage d'une pièce tournante selon la revendication 1 **caractérisé en ce qu'**il comporte une étape (30) de fabrication d'une pièce brute,
- une étape (31) consistant à numériser cette pièce brute,
- une étape d'initialisation d'un vecteur de translation [Txᵢ, Tyᵢ, Tzᵢ] ainsi que des trois angles d'Euler [Axᵢ, Byᵢ, Gzᵢ] correspondant au positionnement initial du modèle numérique (7) déterminé lors de l'étape (31)
- une étape de calcul (33) d'un modèle virtuel par un traitement consistant à déplacer le modèle brut (7) selon la transformation de corps rigide défini par le vecteur [Txᵢ, Tyᵢ, Tzᵢ] ainsi que les angles de rotation [Axᵢ, Byᵢ, Gzᵢ]
- une étape (34) d'usinage virtuel consistant à appliquer les consignes d'usinages sous forme de données numériques (32) au modèle virtuel repositionné lors de l'étape précédente
- une étape (35) de calcul de l'axe d'inertie (28) à partir de la pièce virtuelle intermédiaire susvisée
- une étape de comparaison (36) de l'axe d'inertie calculé (28) à l'axe moteur (6) et de modification lors d'une étape (37) du vecteur [Tx, Ty, Tz] ainsi que des angles de rotation [Ax, By, Gz] pour déterminer une nouvelle position déterminée par un vecteur [Txⱼ, Tyⱼ, Tzⱼ] et par les angles d'Euler [Axⱼ, Byⱼ, Gz_{J}], optimisés suivant une méthode d'optimisation et d'itération de l'ensemble des traitements correspondant aux étapes (33) à (36).

4. - Procédé d'équilibrage d'une pièce tournante selon l'une au moins des revendications précédentes **caractérisé en ce qu'**il comporte des étapes de calcul de l'équilibrage dans une portion limitée et, si cet équilibrage apparaît imparfait, à déterminer une contrainte d'usinage supplémentaire venant s'ajouter aux usinages virtuels (2 à 5) originels, pour l'enlèvement de matière en vue d'équilibrer ladite portion locale.

5. - Procédé d'équilibrage d'une pièce tournante selon la revendication 4 **caractérisé en ce que** l'on procède, après le calcul de l'équilibrage local, à de nouvelles itérations, prenant en compte ce modèle avec les usinages additionnels.

6. - Equipement d'usinage comprenant un processeur configuré pour être commandé par une commande numérique obtenue par la mise en oeuvre du procédé conforme à l'une au moins des revendications précédentes.

7. - Programme d'ordinateur comprenant des instructions de code de programme pour l'exécution des étapes du procédé selon l'une quelconque des revendications 1 à 5 lorsque ledit programme est exécuté sur un ordinateur.

8. - Support d'enregistrement lisible par un ordinateur sur lequel est enregistré un programme d'ordinateur comprenant des instructions de code de programme pour l'exécution des étapes du procédé selon l'une quelconque des revendications 1 à 5.

## Patentansprüche

1. Verfahren zur Auswuchtung eines rotierendes Werkstücks, zwecks Herstellung eines bearbeiteten, ausgewuchteten rotierenden Werkstücks, das bearbeitete Bereiche mit starker Toleranz aufweist (Gleitlager, Wälzlager, ...) und bearbeitete oder nicht bearbeitete (roh belassene Flächen, ...) Bereiche mit geringer Toleranz aufweist, ausgehend von einem rotierenden Werkstücksrohling zum einen und einem digitalen nominalen Modell für die Bearbeitungsanforderungen der bearbeiteten Bereiche mit geringen Toleranzen (b bis 5) eines nominalen rotierenden Werkstücks andererseits, **dadurch gekennzeichnet, dass** das Verfahren folgende Schritte umfasst:
- einen ersten Schritt der Digitalisierung (31) besagten Rohlings, um ein digitales Modell besagten Rohlings in einem vorab festgelegten Digitalisierungsbezugsystem zu erhalten,
- einen Schritt (34) der virtuellen Bearbeitung besagten digitalen Rohlingsmodells zur Berechnung eines digitalen Zwischenmodells (27) im Ziel-Bezugssystem, welches eine Motorachse (6) eines rotierendes Werkstücks umfasst, das zum einen ausgehend vom digitalen Modell des Rohlings und zum anderen ausgehen vom nominalen digitalen Modell mit den Bearbeitungsanforderungen bearbeitet wird,
- einen Schritt (35) der Bestimmung der Trägheitsachse (28) besagten digitalen Zwischenmodells,
- mindestens einen Schritt der Änderung (37) des geometrischen Bezugssystems besagten digitalen Rohlingmodells, damit besagte Trägheitsachse (27) des digitalen Zwischenmodells mit der nominalen Drehachse des Motors (6) im Ziel- Bezugssystem übereinstimmt,
- wiederholte Schritte der Berechung der vorhergehenden Schritte (33, 34, 35), bis die berechnete Abweichung zwischen der Trägheitsachse (28) und der nominalen Achse des Motors (6) unterhalb eines bestimmten Grenzwertes liegt,
- letzter Schritt bestehend aus dem Steuern einer tatsächlichen Bearbeitungsanlage im Ziel- Bezugssystem ausgehend vom nominalen digitalen Modell für die Bearbeitungsanforderungen mit dem tatsächlichen Rohling, der gemäß dem digitalen Zwischenmodell, das sich aus dem letzten Widerholungsvorgang ergab, auf die Bearbeitungsanlage positioniert wurde.

2. Verfahren zur Auswuchtung eines rotierenden Werkstücks nach Anspruch 1, **dadurch gekennzeichnet, dass** besagter Schritt der Änderung des geometrischen Bezugssystems darin besteht, einen Translationsvektor [Tx, Ty, Tz] und drei Euler-Winkel [Ax, By, Gz] zu berechnen.

3. Verfahren zur Auswuchtung eines rotierenden Werkstücks nach Anspruch 1, **dadurch gekennzeichnet, dass** es einen Schritt (30) der Herstellung eines rohen Werkstücks umfasst,
- einen Schritt (31) bestehend aus der Digitalisierung dieses rohen Werkstücks,
- einen Schritt der Initialisierung eines Translationsvektors [Tx₁, Ty₁, Tz₁] und dreier Euler-Winkel [Ax₁, By₁, Gz₁] in Übereinstimmung mit der anfänglichen, in Schritt (31) ermittelten Positionierung des digitalen Modells (7).
- einen Schritt der Berechung (33) eines virtuellen Modells durch eine Bearbeitung, die darin besteht, das rohe Modell (7) gemäß der durch den Vektor [Tx₁, Ty₁, Tz₁] sowie durch die Drehwinkel [Ax₁, By₁, Gz₁] bestimmte Verarbeitung von starren Körpern zu verschieben.
- einen Schritt (34) der virtuellen Bearbeitung bestehend aus der Anwendung der Bearbeitungssollwerte in Form digitaler Daten (32) auf das virtuelle, im vorhergehenden Schritt neu positionierte Modell,
- einen Schritt (35) der Berechung der Trägheitsachse (28) ausgehend vom oben genannten virtuellen Zwischenwerkstück,
- einen Schritt des Vergleichs (36) der berechneten Trägheitsachse (28) mit der Motorachse (6) und der Änderung des Vektors [Tx, Ty, Tz] sowie der Drehwinkel [Ax, By, Gz] in einem Schritt (37) zur Bestimmung einer neuen Position, die festgelegt wird durch einen Vektor [Tx₁, Ty₁, Tz₁] und die Euler-Winkel [Ax₁, By₁, Gz₁], die nach einer Methode der Optimierung und Wiederholung aller Bearbeitungen der Schritte (33) bis (36) verbessert werden.

4. Verfahren zur Auswuchtung eines rotierendes Werkstücks nach mindestens einem der vorhergehenden Ansprüche, **dadurch gekennzeichnet, dass** es Schritte der Berechung der Auswuchtung in einem begrenzten Abschnitt umfasst und, falls diese Auswuchtung als nicht perfekt angesehen wird, die Bestimmung einer zusätzlichen Bearbeitungsanforderung ergänzend zu den ursprünglichen virtuellen Bearbeitungen (2 bis 5), um Material zwecks Auswuchtung des lokalen Abschnitts zu entnehmen.

5. Verfahren zur Auswuchtung eines rotierenden Werkstücks nach Anspruch 4, **dadurch gekennzeichnet, dass** man nach der Berechung der lokalen Auswuchtung die Vorgänge unter Berücksichtigung dieses Modells und den zusätzlichen Bearbeitungsgängen mehrmals wiederholt.

6. Bearbeitungsanlage, die einen Prozessor umfasst, der so konfiguriert ist, dass er über eine numerische Steuerung, die durch die Anwendung des Verfahrens in Übereinstimmung mit mindestens einem der vorhergehenden Ansprüche erzielt wurde, gesteuert werden kann.

7. Computerprogramm, das Programmanweisungscode zur Ausführung der Schritte des Verfahrens nach einem der Ansprüche 1 bis 5 umfasst, wenn besagtes Programm von einem Computer ausgeführt wird.

8. Informationsträger zur Speicherung, der von einem Computer, auf dem ein Computerprogramm mit den Programmcodeanweiszungen zwecks Ausführung der Verfahrensschritte nach einem der Ansprüche 1 bis 5 gespeichert ist, gelesen werden kann.

## Claims

1. A method for balancing a rotating part in order to produce a machined and balanced rotating part, comprising zones machined to high tolerance (rolling bearings, main bearings, etc) and low-tolerance zones machined or not (undressed surfaces, etc), from a rotating-part blank (7) on the one hand and a nominal digital model of the constraints for machining the zones machined at low tolerances (2 to 5) of a nominal rotating part on the other hand, **characterised in that** the method comprises:
• an initial step (31) of digitising said blank for obtaining a digital model of said blank, in a predetermined digitisation reference frame
• a step (34) of virtual machining of said digital model of the blank, for computing an intermediate digital model (27) in the target reference frame comprising the motor axis (6) of a machined rotating part from firstly the digital model of the blank and secondly from the nominal digital model of the machining constraints
• a step (35) of determining the axis of inertia (28) of said intermediate digital model
• at least one step (37) of modifying the geometric reference frame of said digital model of the blank in order to make said axis of inertia (27) of said intermediate digital model correspond to the nominal rotation axis of the motor (6) in the target reference frame
• iterative steps of computation of the previous steps (33, 34, 35) until the difference between the calculated axis of inertia (28) and the nominal axis of the motor (6) is less than a threshold value
• the final step consisting of controlling real machining equipment, in the target reference frame, from the nominal digital model of the machining constraints on the real blank placed on the machining equipment in conformity with the intermediate digital model resulting from the last iteration.

2. A method for balancing a rotating part according to claim 1, **characterised in that** said step of modifying the geometric reference frame consists of re-computing a translation vector [Tx, Ty, Tz] and the three Euler angles [Ax, By, Gz].

3. A method for balancing a rotating part according to claim 1, **characterised in that** it comprises a step (30) of manufacturing an undressed part,
- a step (31) consisting of digitising this undressed part,
- a step of initialising a translation vector [Txᵢ, Tyᵢ, Tzᵢ] and three Euler angles [Axᵢ, Byᵢ, Gzᵢ] corresponding to the initial positioning of the digital model (7) determined during step (31),
- a step (33) of computing a virtual model by means of a processing consisting of moving the undressed model (7) according to the rigid-body transformation defined by the vector [Txᵢ, Tyᵢ, Tzᵢ] and the rotation angles [Axᵢ, Byᵢ, Gzᵢ],
- a virtual-machining step (34) consisting of applying the machining instructions in the form of digital data (32) to the virtual model repositioned during the previous step,
- a step (35) of computing the axis of inertia (28) from the aforementioned intermediate virtual part,
- a step (36) of comparing the calculated axis of inertia (28) with the motor axis (6) and of modifying, during a step (37), the vector [Tx, Ty, Tz] and the rotation angles [Ax, By, Gz] in order to determine a new position determined by a vector [Txⱼ, Tyⱼ, Tzⱼ] and by the Euler angles [Axⱼ, Byⱼ, Gzⱼ], optimised according to a method of optimising and iterating all the processing operations corresponding to steps (33) to (36).

4. A method for balancing a rotating part according to at least one of the preceding claims, **characterised in that** it comprises steps of computing the balancing in a limited portion and, if this balancing appears imperfect, determining a supplementary machining constraint added to the original virtual machinings (2 to 5), for removing material with a view to balancing said local portion.

5. A method for balancing a rotating part according to claim 4, **characterised in that**, after the computation of the local balancing, new iterations are carried out, taking into account this model with the additional machinings.

6. Machining equipment comprising a processor configured so as to be controlled by a digital control obtained by using the method according to at least one of the preceding claims.

7. A computer program, comprising program code instructions for executing the steps of the method according to any of claims 1 to 5, when said program is executed on a computer.

8. A recording medium that can be read by a computer, on which a computer program is recorded, comprising program code instructions for executing the steps of the method according to any of claims 1 to 5.
